# EUROPÄISCHE PATENTANMELDUNG

(11) **EP 1 285 563 A1**
(43) Veröffentlichungstag der Anmeldung: **26.02.2003**
(21) Anmeldenummer: 02018035.2
(22) Anmeldetag: 13.08.2002
(51) Int. Cl.: A01C 7/20, A01C 7/06, A01B 73/04

(54) **Sämaschine**

(30) Priorität: 16.08.2001 DE 10140339
(71) Anmelder: Amazonen-Werke H. Dreyer GmbH & Co. KG, 49205 Hasbergen (DE)
(72) Erfinder: Dreyer, Heinz, Dipl.-Ing.Univ.agr., 49205 Hasbergen (DE)

(57) **Zusammenfassung**

Sämaschine mit einem sich über Laufräder (2) auf dem Boden abstützenden Rahmen (1), zumindest einer Vorratsbehältereinheit (11) und an Särahmen (4,4',4'',8,8'') angeordneten Säelementen, denen das sich im Vorratsbehälter (11) befindliche Material über Dosierorgane, Fördereinrichtungen und Materialleitungen in einstellbaren Mengen zuführbar ist, wobei zumindest ein mittlerer Särahmen (4,4'4'') hinter den Laufrädern (2) und zwei seitliche Särahmen (8,8') vor den Laufrädern (2) in Fahrtrichtung gesehen seitlich des mittleren Särahmens (4,4',4'') angeordnet sind, wobei die seitlichen Särahmen (8,8') jeweils mittels Schwenkarmen (9,9',9'') an dem Rahmen (1) angelenkt sind, dadurch gekennzeichnet, dass der mittlere Särahmen (4) in zwei Teilrahmen geteilt (4',4''), wobei jeder Teilrahmen (4',4'') um eine in Fahrtrichtung (6) verlaufende Schwenkachse (7) zwischen einer Arbeits- und einer Transportsteilung verschwenkbar am Rahmen (1) angeordnet ist.

## Beschreibung

Die Erfindung betrifft eine Sämaschine gemäß des Oberbegriffes des Patentanspruches 1.

Eine derartige Sämaschine ist beispielsweise in der EP 07 49 678 A1 beschrieben. Die dort beschriebene Sämaschine kann eine maximale Arbeitsbreite von 9m aufweisen, da jeder Rahmenbereich maximal 3m breit sein kann, um die Maschine auf öffentlichen Straßen in der Transportstellung transportieren zu können.

Der Erfindung liegt die Aufgabe zugrunde, eine Sämaschine vorzuschlagen, die eine größere Arbeitsbreite von 9m aufweist, die jedoch in eine Transportstellung bringbar ist, wobei die Breite der Maschine dann kleiner oder gleich 3m ist. Gleichzeitig darf die max. Transporthöhe von 4m bei ausreichender Bodenfreiheit nicht überschritten werden.

Diese Aufgabe wird erfindungsgemäß durch die kennzeichnenden Merkmale des Patentanspruches 1 gelöst.

Infolge dieser Maßnahmen lässt sich in überraschend einfacher Weise eine Sämaschine mit 12m Arbeitsbreite bei einer Transportbreite, wenn die einzelnen Teile eingeklappt sind, von 3m schaffen, ohne dass sich eine zu große Bauhöhe in Transportstellung der Särahmen ergibt.

Um eine gute Gewichtsverteilung von den einzelnen Bauelementen der Sämaschine zu erreichen, ist vorgesehen, dass die Vorratsbehältereinheit vor den seitlichen Särahmen am Rahmen angeordnet ist. Hierdurch ergibt sich auch, dass die vorderen und seitlichen Särahmen relativ dicht zusammengerückt werden können.

Eine vorteilhafte Anlenkung der seitlichen Särahmen wird durch die Merkmale des Patentanspruches 3 erreicht. Hierdurch wird einerseits eine gute Überführung der seitlichen Särahmen aus der Arbeits- in die Transportstellung und umgedreht erreicht. Darüber hinaus ist eine gute Bodenanpassung der seitlichen Särahmen an die Bodenkontur gewährleistet. Um die jeweiligen an den Särahmen angeordneten Säschare in vorteilhafter Weise das zu verteilende Material zuführen zu können, ist vorgesehen, dass jedem seitlichen Särahmen und jedem Teilrahmen ein am Vorratsbehälter angeordnetes Dosierorgan und ein Verteilerkopf zugeordnet sind.

Um mit der Sämaschine gleichzeitig Saatgut und Dünger ausbringen zu können, ist vorgesehen, dass die Vorratsbehältereinheit zumindest zwei Vorratsbehälter aufweist, dass der eine Vorratsbehälter zur Aufnahme von Saatgut und der andere Vorratsbehälter zur Aufnahme von Dünger vorgesehen ist.

Ein vorteilhafter Antrieb der einzelnen Dosierorgane wird dadurch erreich, dass die den seitlichen Särahmen zugeordneten Dosierorgane von einem gemeinsamen Antrieb angetrieben werden, und dass die dem hinteren Särahmen zugeordneten Dosierorgane gemeinsam angetrieben werden. Um in einfacher Weise gleichzeitig mit dem Verbringen der Särahmen in die Arbeitsstellung die Dosierorgane einzuschalten und bei dem Verbringen in die Transportstellung die Dosierorgane abzuschalten, ist vorgesehen, dass die Mittel zum Ein- und Ausschalten der den seitlichen Särahmen zugeordneten Dosierorgane und dem Anheben und Absenken der den vorderen Särahmen zugeordneten Betätigungselemente von einem gemeinsamen Schaltelement betätigbar sind, und dass die Mittel zum Ein- und Ausschalten der den mittleren Särahmen zugeordneten Dosierorgane und dem Anheben und Absenken der den mittleren Särahmen zugeordneten Betätigungselemente von einem gemeinsamen Schaltelement betätigbar sind.

Um in einfacher Weise die Fläche mit einer geringeren Arbeitsbreite, insbesondere bei schmaleren Randstreifen am Feldrand besäen zu können, ist vorgesehen, dass der Antrieb der den vorderen Särahmen zugeordneten Dosierorgane unabhängig von den Antrieb der den hinteren Särahmen zugeordneten Dosierorgane betätigbar ist.

Um eine gleichmäßige Ausbringung am Beginn der Arbeitsbahn und am Ende der Arbeitsbahn sicherzustellen, ist vorgesehen, dass zu Beginn bzw. zum Ende einer Arbeitsbahn das Saatgut und/oder die Düngemittel über die gesamte Arbeitsbreite zumindest annähernd parallel zu einer quer zur Fahrtrichtung verlaufenden Arbeitsebene im Boden abgelegt wird.

Dieses gleichzeitige Einsetzen auf einer Linie lässt sich beispielsweise dadurch erreichen, dass die Mittel mittels Handhebel nacheinander betätigbar sind. Selbstverständlich ist es möglich, dass diese Einschaltung auch über eine elektronische Vorrichtung geschieht ist, mittels welcher die Mittel entsprechend betätigbar sind.

Um eine vorteilhafte Anordnung der Fördereinrichtung an dem Vorratsbehälter zu erreichen, ist vorgesehen, dass die Fördereinrichtung unterhalb der Dosierorgane schräg zur Fahrtrichtung verlaufend hintereinander angeordnet sind.

Ein vorteilhafter Antrieb der Dosierorgane lässt sich dadurch erreichen, dass ein Antriebsrad zum Antrieb der Dosierorgane zumindest einem der vorderen seitlichen Särahmen und ein Antriebsrad zum Antrieb der Dosierorgane zumindest einem der hinteren Särahmen zugeordnet sind.

Weitere Einzelheiten der Erfindung sind den übrigen Unteransprüchen, der Beispielsbeschreibung und den Zeichnungen zu entnehmen. Hierbei zeigen
- Fig. 1: die Sämaschine in Arbeitsstellung in der Draufsicht, und in Prinzipdarstellung,
- Fig. 2: die Sämaschine in Transportstellung in der Draufsicht und in Prinzipdarstellung,
- Fig. 3: die Anordnung der seitlichen Särahmen in Arbeitsstellung in der Ansicht III - III,
- Fig. 4: die Anordnung der Särahmen in Transportstellung in der Ansicht III - III und in Prinzipdarstellung,
- Fig. 5: eine weitere Sämaschine in Arbeitsstellung, in der Draufsicht, und Prinzipdarstellung,
- Fig. 6: die Sämaschine gemäß Fig. 5 in Transportstellung, in der Draufsicht und in Prinzipdarstellung,
- Fig. 7: die Anordnung der äußeren Särahmen in Arbeitsstellung und in der Ansicht VII - VII,
- Fig. 8: die Darstellung der ersten Überführungsphase der äußeren Särahmen in Transportstellung in Prinzipdarstellung und in der Ansicht VII - VII und
- Fig. 9: die Särahmen in Transportstellung in der Ansicht VII - VII.

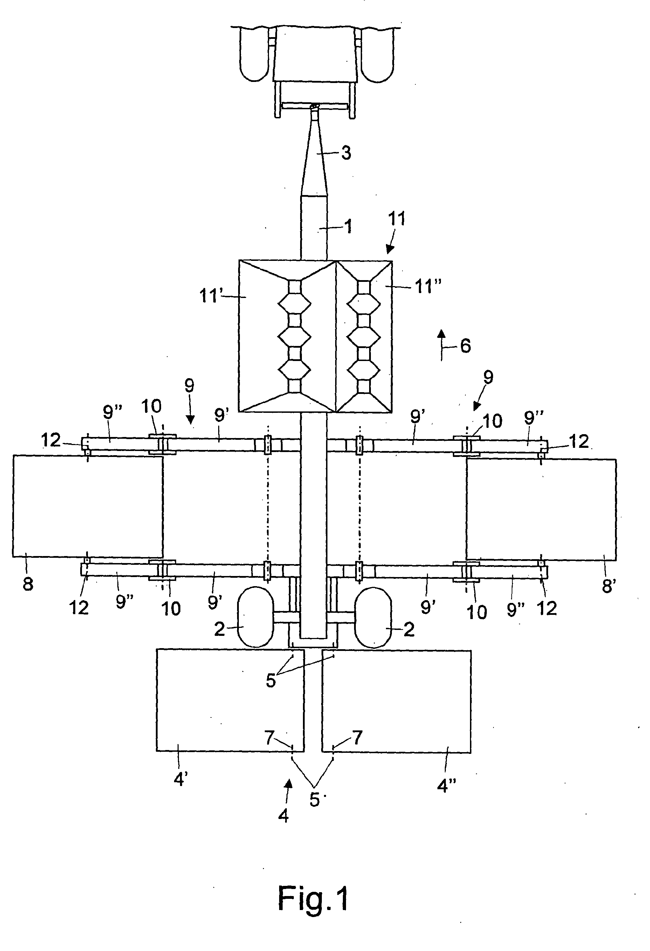

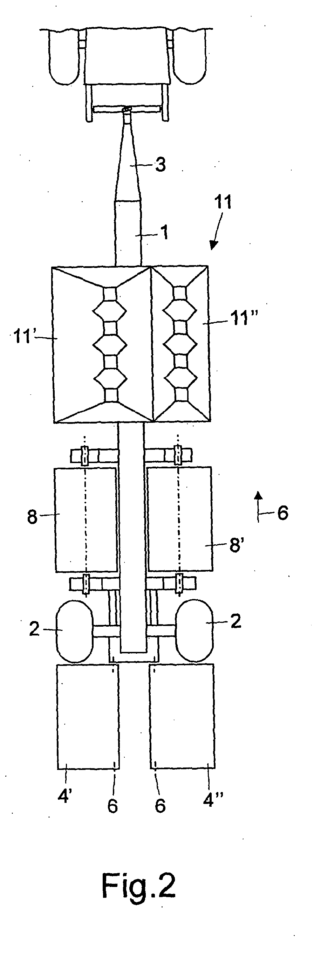

Die Sämaschine gemäß den Fig. 1 bis 4 weist den Rahmen 1 auf, der sich über Laufräder 2 auf dem Boden abstützt. Die Laufräder 2 sind mittels einer nicht dargestellten Hebevorrichtung gegenüber dem Rahmen 1 in aufrechter Ebene bewegbar angeordnet, um den Rahmen 1 für die Arbeitsstellung abzusenken und in die Transportstellung anzuheben. Auf der Vorderseite des Rahmens 1 ist die Zugdeichsel 3 zur Ankupplung der Sämaschine an eine Zugvorrichtung eines Ackerschleppers angeordnet. Auf der Rückseite des Rahmens 1 ist mittels einer nicht näher dargestellten Kupplungsvorrichtung ein mittlerer Särahmen 4, der aus den beiden Teilrahmen 4', 4'' besteht, angeordnet. Die Teilrahmen 4', 4'' sind mittels Schwenkgelenken 5 an die Kupplungseinrichtung, die sich am hinteren Rahmenteil befindet, angeordnet und können mittels nicht dargestellter Hubelemente, beispielsweise Hydraulikzylinder, um die in Fahrtrichtung 6 verlaufenden Achsen 7 aus der in Fig. 1 dargestellten Arbeitsstellung in die in Fig. 2 dargestellte Transportstellung um 90° geschwenkt werden. Die Teilrahmen 4',4'' des hinteren mittleren Särahmens 4 weisen Säschare auf, die nicht darstellt sind.

Vor den Laufrädern 2 sind die beiden seitlichen Särahmen 8,8' über Schwenkarme 9 an dem Rahmen 1 angeordnet. An den Särahmen 8, 8' sind nicht dargestellte Säschare angeordnet. Die Schwenkarme 9 können zu Schwenkrahmen 9 miteinander verbunden sein. Die Schwenkarme bestehen aus den mittels der Gelenke 10 am Rahmen 1 angelenkten inneren Teilen 9' und den mittels der Gelenke 11 an den inneren Teilen 9' angelenkten äußeren Teilen 9''. Zwischen den Rahmen 1 und dem inneren Teilen 9' der Arme 9 und dem inneren 9' und dem äußeren Teil 9'' sind Betätigungselemente, beispielsweise in Form von Hydraulikzylindern angeordnet, die nicht dargestellt sind.

Vor den seitlichen Särahmen 8,8' ist an dem Rahmen 1 die Vorratsbehältereinheit 11, die aus einem Vorratsbehälter 11' für Saatgut und einem Vorratsbehälter 11' für Düngemittel besteht angeordnet. Es ist jedoch auch möglich, das nur ein Vorratsbehälter für Saatgut am Rahmen 1 angeordnet ist.

Die Schwenkarme 9 sind zumindest annähernd in dem in Fahrtrichtung 6 gesehen mittleren Bereich an den Särahmen 8,8' angelenkt, wobei die Schwenkarme 9 im Bereich der inneren Enden und/oder der inneren Hälfte der seitlichen Särahmen 8,8' ein Schwenkgelenk 12 aufweist.

Jedem Särahmen 8,8'und Teilrahmen 4', 4'' ist ein am Vorratsbehälter 11 angeordnetes Dosierorgan (nicht dargestellt) sowie ein nicht dargestellter Verteilerkopf zugeordnet.

Die Dosierorgane werden von an den Särahmen 8, 8' bzw. Teilrahmen 4', 4'' angeordneten und nicht dargestellten Antriebsrädern über eine ebenfalls nicht dargestellte Übertragungseinrichtung angetrieben. Hierbei ist der Antrieb derart vorgesehen: Die den seitlichen Särahmen 8, 8' zugeordneten Dosierorgane werden von einem gemeinsamen Antrieb angetrieben, während die dem hinteren Särahmen 4', 4'' zugeordneten Dosierorgane ebenfalls gemeinsam angetrieben werden. Hierbei ist vorgesehen, dass der Antrieb der den vorderen Särahmen 8, 8' zugeordneten Dosierorgane unabhängig von dem Antrieb der dem hinteren Särahmen 4', 4'' zugeordneten Dosierorgan betätigbar ist. Hierbei sind Mittel zum Ein- und Ausschalten der den seitlichen Särahmen 8, 8' zugeordneten Dosierorganen und dem Anheben und Absenken der den vorderen Särahmen 8, 8' zugeordneten Betätigungselemente von einem gemeinsamen Schaltelement betätigbar. Des weiteren sind die Mittel zum Ein- und Ausschalten der dem mittleren Teilrahmen 4', 4'' zugeordneten Dosierorgan und dem Anheben und Absenken der dem mittleren Teilrahmen 4',4'' zugeordneten Betätigungselemente von einem gemeinsamen Schaltelement betätigbar. Hierbei sind Mittel vorhanden, mittels denen es möglich ist, dass zu Beginn bzw. einer Arbeitsbahn das Saatgut und/oder die Düngemittel über die gesamte Arbeitsbreite zumindest annähernd parallel zu einer quer zur Fahrtrichtung verlaufenden Arbeitsebene im Boden abgelegt wird. Diese Mittel können mittels Handhebel nacheinander betätigbar sein. Es ist jedoch auch möglich, dass eine elektronische Vorrichtung vorhanden ist, mittels welcher die Mittel entsprechend betätigbar sind.

Um einerseits einen kompakt und kurzbauenden Vorratsbehälter 11 mit mehreren Dosierorganen sowie eine vorteilhafte Anordnung der Fördereinrichtung unterhalb der Dosierorgane zu schaffen, sind die Fördereinrichtung in nicht dargestellter Weise unterhalb der Dosierorgane schräg zur Fahrtrichtung 6 angeordnet. Hierdurch gibt sich eine geschickt verschachtelte Anordnung.

Wie bereit vor erwähnt, ist ein Antriebsrad zum Antrieb der Dosierorgane zumindest einem der vorderen seitlichen Särahmen 8, 8' und einem Antriebrad der Dosierorgane zumindest einem der hinteren Teilrahmen 4, 4' zugeordnet.

An jedem Särahmen 4', 4'', 8, 8' sind in bekannter Weise und daher nicht dargestellter Weise mehrere Säschare versetzt und auf Lücke angeordnet. Diesen Säscharen werden über nicht dargestellte Verteilerköpfe und über Saatleitungen das sich in den Vorratsbehältern 11 befindliche Saatgut und/oder Düngemittel in einstellbarer Weise zugeleitet. Hierbei ist jedem Särahmen bzw. Teilrahmen ein eigener Verteilerkopf zugeordnet, der über eine Fördereinleitung mit einem der Dosierorgane des Vorratsbehälters 11 verbunden ist. Diese Förderleitungen sind in bekannter und daher nicht dargestellter Weise mit einem einen Förderluftstrom erzeugenden Gebläse verbunden.

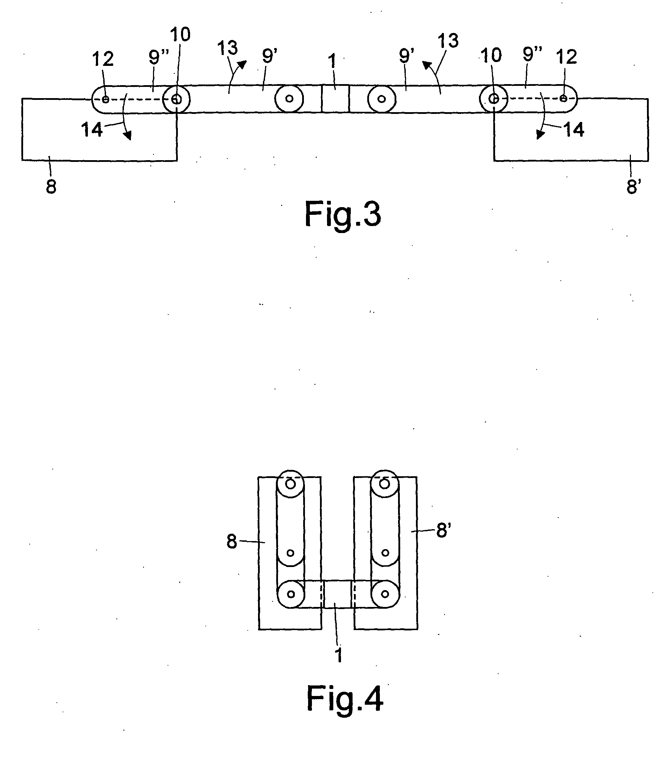

Um die Sämaschine aus der in Fig. 1 dargestellten Arbeitsstellung in die in Fig. 2 dargestellte Transportstellung zu bringen werden mittels der hydraulischen Hubelemente die Teilrahmen 4', 4'' des hinteren Särahmens 4 um die Schwenkachsen 7 in Pfeilrichtung nach innen und oben geschwenkt. Weiterhin werden die mittleren Särahmen 8, 8' in die in Fig. 2 dargestellte Transportstellung dadurch verbracht, dass mittels der Hubelemente die inneren Teile 9' der Arme 9 in Pfeilrichtung 13 verschwenkt werden, während die äußeren Teile der Arme 9 in Pfeilrichtung verschwenkt 14 werden. Somit gelangen dann die seitlichen Särahmen 8, 8' in die in Fig. 2 und 4 dargestellten Positionen.

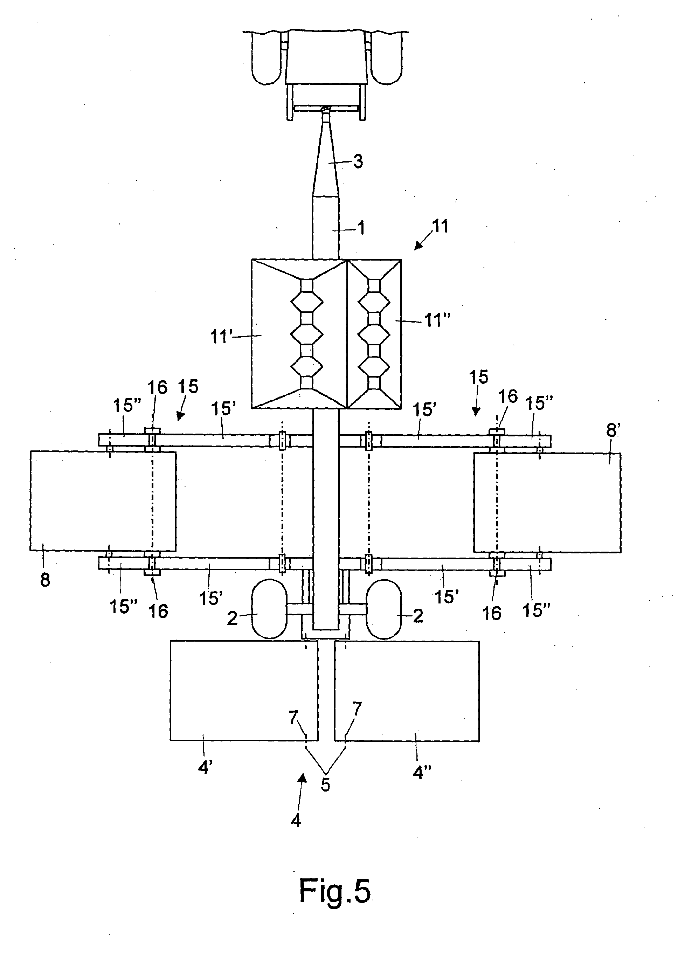

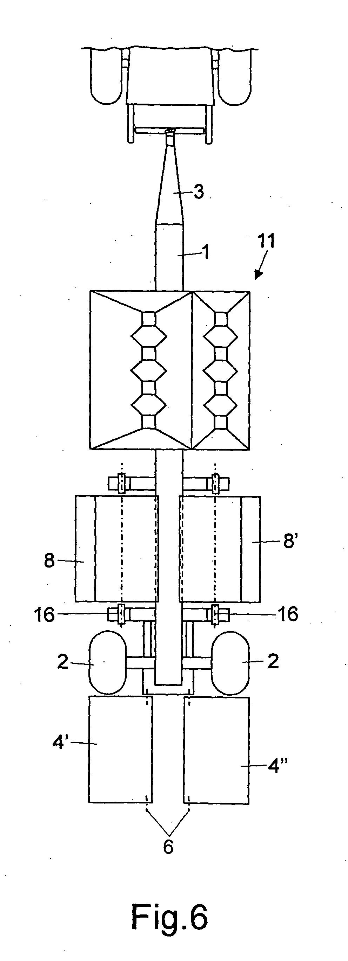

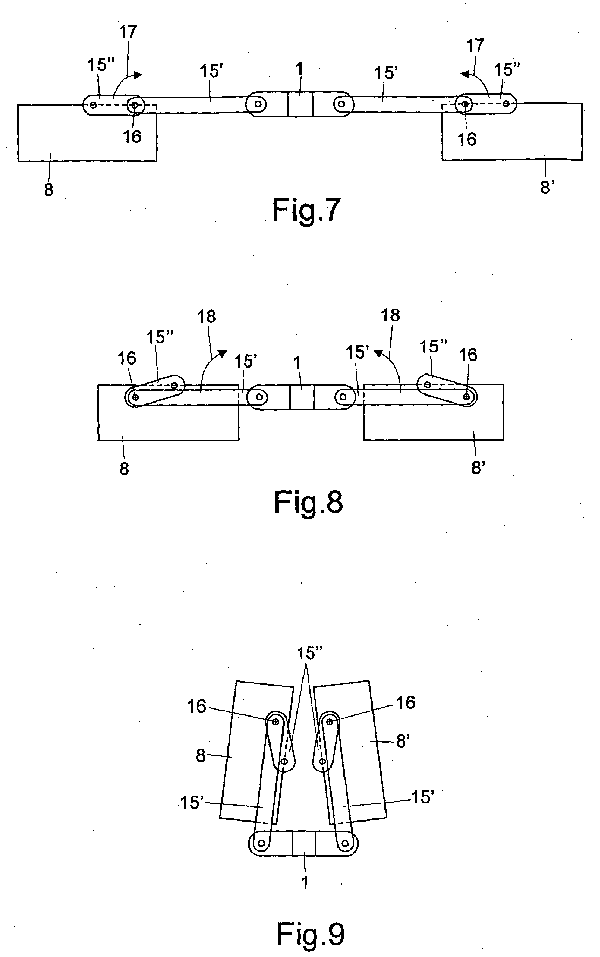

Die Sämaschine gemäß Fig. 5 bis 9 unterscheidet sich von der Sämaschine gemäß den Fig. 1 und 2 durch eine andere Ausbildung der Tragarme 15 für die seitlichen Seitenrahmen 8, 8'. Die Tragarme 15 bestehen aus dem inneren Teil 15' und äußeren Teil 15'' der Arme 15, die jeweils zu Schwenkrahmen zusammengefasst werden können. Im Unterschied zu der Sämaschine gemäß den Fig. 1 bis 4 ist bei der Sämaschine nach den Fig. 5 bis 9 das Schwenkgelenk 16, welches die inneren Teile 15' und die äußeren Teile 15'' der Arme verbinden, in einem Abstand von dem inneren Ende der Seitenrahmen 8, 8' angeordnet. Um nun diese Seitenrahmen 8, 8' aus der Arbeitsstellung gemäß Fig. 5 und 7 in die in Fig. 6 und 9 dargestellte Transportposition zu bringen, werden zunächst die hinteren Teilrahmen 4, 4', wie bei der Maschine gemäß Fig. 1 bis 4 verschwenkt. Weiterhin wird dann zunächst das Hubmittel, welches zwischen dem inneren Teil 15 und äußeren Teil 15'' des Armes 15 angeordnet ist, betätigt, um so die seitlichen Särahmen in die in Fig. 8 dargestellte Position zu bringen. Hierbei werden die äußeren Teile 15'' der Schwenkarme 15 in Pfeilrichtung 17 aus der in Fig. 7 in die in Fig. 8 dargestellte Position gebracht. Anschließend werden die zwischen den inneren Teil 15' der Tragarme 15 und dem Rahmen 1 angeordneten Hubmittel betätigt, so dass der innere Teil 15 mit den Särahmen 8, 8' in Pfeilrichtung 18 aus der in Fig. 8 dargestellten Position in die in Fig. 9 dargestellte Position gebracht werden.

Dadurch, dass die den jeweiligen Särahmen zugeordnete Betätigungsmittel und Antriebsmittel jeweils entsprechend miteinander gekoppelt sind, wird durch das Verbringen des jeweiligen Särahmens aus der Arbeitsstellung in Transportstellung auch die Ausbringung von Material, welches diesem jeweiligen Särahmen zugeführt wird, unterbrochen.

**[Stand der Technik]**

**[Aufgabe der Erfindung]**

**[Beispiele]**

## Patentansprüche

1. Sämaschine mit einem sich über Laufräder auf dem Boden abstützenden Rahmen, zumindest einer Vorratsbehältereinheit und an Särahmen (4,4',4'',8,8') angeordneten Säelementen, denen das sich im Vorratsbehälter (11) befindliche Material über Dosierorgane, Fördereinrichtungen und Materialleitungen in einstellbaren Mengen zuführbar ist, wobei zumindest ein mittlerer Särahmen (4,4',4'') hinter den Laufrädern (2) und zwei seitliche Särahmen (8,8') vor den Laufrädern (2) in Fahrtrichtung (6) gesehen seitlich des mittleren Särahmens (4,4',4'') angeordnet sind, wobei die seitlichen Särahmen (8,8') jeweils mittels Schwenkarmen (9,9',9'') an dem Rahmen (1) angelenkt sind, **dadurch gekennzeichnet, dass** der mittlere Särahmen (4) in zwei Teilrahmen (4',4'') geteilt, wobei jeder Teilrahmen (4',4'') um eine in Fahrtrichtung (6) verlaufende Schwenkachse (7) zwischen einer Arbeits- und einer Transportsteilung verschwenkbar am Rahmen (1) angeordnet ist.

2. Sämaschine nach Anspruch 1, **dadurch gekennzeichnet, dass** die Vorratsbehältereinheit (11) vor den seitlichen Särahmen (8,8') am Rahmen (1) angeordnet ist.

3. Sämaschine nach Anspruch 1, **dadurch gekennzeichnet, dass** die Schwenkarme (9,9',9'') zumindest annähernd in dem in Fahrtrichtung ( 6) gesehen mittleren Bereich an dem Särahmen (8,8') angelenkt sind, dass die Schwenkarme (8,8') im Bereich der inneren Enden und/oder inneren Hälfte der seitlichen Särahmen (8,8') ein Schwenkgelenk (10) aufweisen.

4. Sämaschine nach einem oder mehreren der vorstehenden Ansprüche, **dadurch gekennzeichnet, dass** jedem seitlichen Särahmen (8,8') und jedem Teilrahmen (4',4'') ein am Vorratsbehälter angeordnetes Dosierorgan und ein Verteilerkopf zugeordnet sind.

5. Sämaschine nach einem oder mehreren der vorstehenden Ansprüche, **dadurch gekennzeichnet, dass** die Vorratsbehältereinheit (11) zumindest zwei Vorratsbehälter (11',11'') aufweist, dass der eine Vorratsbehälter (11') zur Aufnahme von Saatgut und der andere Vorratsbehälter (11'') zur Aufnahme von Dünger vorgesehen ist.

6. Sämaschine nach einem oder mehreren der vorstehenden Ansprüche, **dadurch gekennzeichnet, dass** die den seitlichen Särahmen (8,8') zugeordneten Dosierorgane von einem gemeinsamen Antrieb angetrieben werden, und dass die dem hinteren Särahmen (4,4',4'') zugeordneten Dosierorgane gemeinsam angetrieben werden.

7. Sämaschine nach einem oder mehreren der vorstehenden Ansprüche, **dadurch gekennzeichnet, dass** der Antrieb der den vorderen Särahmen (8,8') zugeordneten Dosierorgane unabhängig von den Antrieb der den hinteren Särahmen (4,4',4'') zugeordneten Dosierorgane betätigbar ist.

8. Sämaschine nach einem oder mehreren der vorstehenden Ansprüche, **dadurch gekennzeichnet, dass** die Mittel zum Ein- und Ausschalten der den seitlichen Särahmen (8,8') zugeordneten Dosierorgane und dem Anheben und Absenken der den vorderen Särahmen (8,8') zugeordneten Betätigungselemente von einem gemeinsamen Schaltelement betätigbar sind, und dass die Mittel zum Ein- und Ausschalten der den mittleren Särahmen (4,4',4'') zugeordneten Dosierorgane und dem Anheben und Absenken der den mittleren Särahmen (4,4',4'') zugeordneten Betätigungselemente von einem gemeinsamen Schaltelement betätigbar sind.

9. Sämaschine nach einem oder mehreren der vorstehenden Ansprüche, **dadurch gekennzeichnet, dass** Mittel vorhanden sind, mittels denen es möglich ist, dass zu Beginn bzw. zum Ende einer Arbeitsbahn das Saatgut und/oder die Düngemittel über die gesamte Arbeitsbreite zumindest annähernd parallel zu einer quer zur Fahrtrichtung verlaufenden Arbeitsebene im Boden abgelegt wird.

10. Sämaschine nach einem oder mehreren der vorstehenden Ansprüche, **dadurch gekennzeichnet, dass** diese Mittel mittels Handhebel nacheinander betätigbar sind.

11. Sämaschine nach einem oder mehreren der vorstehenden Ansprüche, **dadurch gekennzeichnet, dass** eine elektronische Vorrichtung vorhanden ist, mittels welcher die Mittel entsprechend betätigbar sind.

12. Sämaschine nach einem oder mehreren der vorstehenden Ansprüche, **dadurch gekennzeichnet, dass** die Fördereinrichtungen unterhalb der Dosierorgane schräg zur Fahrtrichtung verlaufend hintereinander angeordnet sind.

13. Sämaschine nach einem oder mehreren der vorstehenden Ansprüche, **dadurch gekennzeichnet, dass** ein Antriebsrad zum Antrieb der Dosierorgane zumindest einem der vorderen seitlichen Särahmen und ein Antriebsrad zum Antrieb der Dosierorgane zumindest einem der hinteren Särahmen zugeordnet sind.
